# EUROPÄISCHE PATENTANMELDUNG

(11) **EP 0 957 301 A2**
(43) Veröffentlichungstag der Anmeldung: **17.11.1999**
(21) Anmeldenummer: 99109540.7
(22) Anmeldetag: 12.05.1999
(51) Int. Cl.: F16K 31/20

(54) **Absperrorgan für Fluide**

(30) Priorität: 12.05.1998 DE 29808322 U
(71) Anmelder: Quilitz, Olaf, 63637 Jossgrund-Lettgenbrunn (DE)
(72) Erfinder: Die Erfindernennung liegt noch nicht vor
(74) Vertreter: Stoffregen, Hans-Herbert, Dr. Dipl.-Phys. Patentanwalt

(57) **Zusammenfassung**

Die Erfindung bezieht sich auf ein Absperrorgan (116) für Fluide umfassend ein Gehäuse (118) mit in diesem verstellbarem an einem Ventilsitz (122) anliegenden oder zu diesem beabstandeten Verschlusskörper (130) sowie verstellbarem Auftriebskörper, über den bei unzureichendem Auftrieb mittelbar oder unmittelbar der Verschlusskörper von dem Ventilsitz beabstandet ist, um eine Verbindung zwischen Fluidzulauf (62) und Fluidauslauf (78) herzustellen. Um das Absperrorgan konstruktiv einfach aufzubauen und gleichzeitig eine hohe Funktionstüchtigkeit sicherzustellen, wird vorgeschlagen, dass der Fluidzulauf (62) in einer bodenseitig von einer Membran (68) begrenzten ersten Kammer (64) mündet, dass die Membran gegenüberliegend zu der ersten Kammer eine zweite Kammer (66) begrenzt, dass von der zweiten Kammer eine erste Verbindung (84) ausgeht, die zu einem den Ventilsitz (132) aufweisenden Gehäuseabschnitt verläuft und die durch den Verschlusskörper (130) absperrbar oder freigebbar ist, dass zwischen dem Fluidzulauf und der zweiten Kammer eine zweite Verbindung (82) verläuft, dass in der ersten Kammer oberhalb des membranseitig freien Querschnitts der zweiten Kammer ein den Fluidauslass (78) bildendes Auslasselement (80) angeordnet ist, das bei an dem Ventilsitz anliegendem Verschlusskörper dichtend von der Membran verschlossen ist, und dass bei zu dem Ventilsitz oder der Öffnung beabstandetem Verschlusskörper die Membran in Richtung der zweiten Kammer zum Freigeben des Auslasselements verstellbar ist.

## Beschreibung

Die Erfindung bezieht sich auf ein Absperrorgan für Flüssigkeiten umfassend ein Gehäuse mit in diesem verstellbaren an einem Ventilsitz anliegenden oder zu diesem beabstandeten Verschlusskörper sowie verstellbarem Auftrittskörper, über den bei unzureichendem Auftrieb mittelbar oder unmittelbar der Verschlusskörper zu dem Ventilsitz beabstandet ist, um eine Verbindung zwischen Flüssigkeitszulauf und Flüssigkeitsablauf herzustellen.

Bei Absperrorganen wird deren Verschlusselement oder -körper vorwiegend in Durchflussrichtung bewegt. In einfachster Form wird als Verschlussorgan ein Teller verwendet, der im geschlossenen Zustand auf einem Ventilsitz aufsitzt. Bei Kegelventilen sind die Fläche bzw. der Sitz und Schließteil kegelförmig ausgebildet. Bei Kugelventilen werden Kugeln als Verschlussorgane benutzt, die mit einer kegeligen oder kalottenförmigen Gegenfläche zusammenwirken.

Aus dem DE 89 01 747 U1 ist ein Trinkwasserventil für insbesondere Kleintiere bekannt, bei dem in einem Ventilgehäuse ein Ventildichtelement in Form einer Kugel zum Verschließen des Ventils an einem Ventilsitz anliegt. Um eine hinreichende Dichtwirkung zu erzielen, ist es erforderlich, dass auf das Kugelelement ein Ventilstift schwerkraftbedingt einwirkt. Gegenüberliegend zu dem Ventilstift und die Öffnung des Ventilgehäuses durchsetzend ist ein Betätigungsstift angeordnet, der bei einem axialen Verstellen bzw. Kippen der Kugel von dem Ventilsitz entfernt wird.

Entsprechende Konstruktionen sind aufwendig und stellen nicht im hinreichenden Umfang sicher, dass nur bei Betätigen des Ventils Flüssigkeit ausströmt; denn wird das Ventil nicht vertikal eingebaut, kann der Ventilstift nicht im erforderlichen Umfang aufdas Verschlussorgan einwirken, damit dieses dichtend an dem Ventilsitz anliegt.

Ein entsprechendes Ventil ist auch nicht dazu geeignet, dass in einem Behältnis eine Mindestmenge an Flüssigkeit vorliegt bzw. bei zuviel Flüssigkeit eine weitere Zufuhr unterbunden wird.

Der vorliegenden Erfindung liegt das Problem zugrunde, ein Absperrorgan für Flüssigkeiten, das zum Beispiel für Tiertränken benutzt werden kann, ohne dass hierdurch eine Einschränkung erfolgt, zur Verfügung zu stellen, das überaus einfach aufgebaut ist und eine hohe Zuverlässigkeit bietet. Dabei soll sichergestellt werden, dass mit konstruktiv einfachen Maßnahmen sichergestellt ist, dass über das Ventil in einem Behältnis stets nur soviel Flüssigkeit strömen kann, dass das Behältnis im gewünschten Umfang gefüllt ist.

Das Problem wird erfindungsgemäß zum einen dadurch gelöst, dass der Flüssigkeitszulauf in einer bodenseitig von einer Membran begrenzten ersten Kammer mündet, dass die Membran gegenüberliegend zu der ersten Kammer eine zweite Kammer begrenzt, dass von der zweiten Kammer eine erste Verbindung ausgeht, die zu einem den Ventilsitz aufweisenden Gehäuseabschnitt oder -einsatz verläuft und durch den Verschlusskörper absperrbar oder freigebbar ist, dass zwischen dem Fluidzulauf und der zweiten Kammer eine zweite Verbindung verläuft, dass in der ersten Kammer oberhalb des membranseitig freien Querschnitts der zweiten Kammer ein den Fluidauslass bildendes Auslasselement angeordnet ist, das bei an dem Ventilsitz anliegendem Verschlusskörper dichtend von der Membran verschlossen ist, und dass bei zu dem Ventilsitz beabstandetem Verschlusskörper die Membran in Richtung der zweiten Kammer zum Freigeben des Auslasselementes verstellbar ist.

Erfindungsgemäß wird ein Ventil zur Verfügung gestellt, bei dem die Flüssigkeitszulauföffnung mit einer ersten und zweiten Kammer verbunden ist, die durch eine Membran voneinander getrennt sind, wobei bei verschlossenem Ventil die Membran die von der ersten Kammer ausgehende Fluidauslassöffnung verschließt und bei geöffnetem Ventil die Öffnung freigibt.

Konstruktionsbedingt ist ein einfacher Aufbau bei hoher Zuverlässigkeit gegeben, wobei die Membran gegebenenfalls so dimensioniert bzw. eine derartige Eigensteifigkeit aufweisen kann, dass bei zu hohem einlassseitigen Flüssigkeitsdruck auch bei an dem Ventilsitz anliegenden Verschlusskörper die Membran in Richtung der zweiten Kammer verstellt wird, so dass infolgedessen eine Verbindung zwischen Flüssigkeitszu- und -ablauf gegeben ist.

Das Auslasselement selbst sollte ein hohlzylindrischer Abschnitt eines Gehäuseeinsatzes sein, der seinerseits koaxial und beabstandet zur Gehäuseinnenwand von einer zumindest eine Durchbrechung aufweisenden Wandung umgeben ist, über die einerseits die Membran dichtend an einem Gehäuseabschnitt oder Einsatz fixiert wird, wobei über die Durchbrechung selbst die Flüssigkeit in den Raum strömt, der zwischen der die Membran fixierenden Wandung und dem hohlzylindrischen Auslasselement verläuft.

Eine hohe Funktionstüchtigkeit ergibt sich insbesondere dann, wenn die erste Kammer in Bezug auf die aufzunehmende Flüssigkeit bei abgedichtetem Auslasselement ein Volumen aufweist, das zwei- bis zehnmal, insbesondere fünf- bis zehnmal größer als das der zweiten Kammer ist.

Die Membran sollte einen umlaufenden sich innerhalb der ersten Kammer erstreckenden Wulst aufweisen, um u.a. eine Zentrierung der Membran zu dem Auslasselement bzw. dem hohlzylindrischen Abschnitt zu ermöglichen. Des Weiteren kann eine Materialschwächung der Membran in der die zweite Kammer begrenzenden Fläche außerhalb des hohlzylindrischen Auslasselementes gegeben sein, um eine gewünschte Eigensteifigkeit zu erzielen. Dabei sollte die Materialschwächung wie umlaufende Nut im Bereich der umlaufenden Wulst vorgesehen sein.

Durch den erfindungsgemäßen Aufbau des Schwimmerventils besteht die Möglichkeit, dass die Fluidzulaufrichtung und Fluidauslassöffnung zueinander einen rechten oder in etwa einen rechten Winkel beschreiben.

Hinsichtlich des Verschlusskörpers ist anzumerken, dass dieser als ein an den Ventilsitz anlegbarer Kegelstumpfabschnitt bzw. Verschlussstift oder -nadel ausgebildet sein sollte. Dabei kann der Kegelstumpfabschnitt in einen in Richtung der ersten Kammer und konzentrisch von einem Ringspalt im Gehäuse als erste Verbindung umgebenen zylindrischen Abschnitt übergehen. Der Kegelstumpfabschnitt bzw. die Nadel oder der Stift kann bodenseifig unmittelbar oder über einen bodenseitig vorhandenen zylindrischen weiteren Abschnitt mit dem Schwimmkörper verbunden sein. Da Ventilsitz selbst kann im Übrigen Rand der Öffnung zu der zweiten Kammer führenden Verbindung wie Bohrung sein.

Nach einem eigenständigen Vorschlag der Erfindung zeichnet sich das Absperrorgan der eingangs genannten Art dadurch aus, dass der Verschlusskörper in dessen Verstellrichtung längenveränderbar ist, dass der Verschlusskörper in dem Gehäuse eingespannt ist und beabstandet hierzu ein Widerlager für ein den Verschlusskörper in dessen Verstellrichtung kraftbeaufschlagendes Federelement aufweist, dass der Verschlusskörper mit dem Auftriebskörper verbunden ist und dass bei unzureichendem Auftrieb das Federelement den Verschlusskörper derart kraftbeaufschlagt, dass der Verschlusskörper von dem Ventilsitz beabstandet ist.

Durch die vorgeschlagene Konstruktion wird sichergestellt, dass über das Absperrorgan, das auch als Schwimmerventil bezeichnet werden kann, stets nur soviel Flüssigkeit strömen kann, bis der Auftriebskörper im erforderlichen Umfang auftriebsbedingt verstellt wird, so dass die Auftriebskraft die von dem Federelement hervorgerufene Kraft sowie die von dem über die Zulauföffnung zuströmende Flüssigkeit und auf den Verschlusskörper einwirkende Kraft mit dem Ergebnis kompensiert wird, dass der Ventilkörper dichtend an dem Ventilsitz anliegt. Dabei kann der Verschlusskörper entgegen der von dem Federelement hervorgerufenen Kraft im gewünschten Umfang vorgespannt werden, um auf diese Weise den Öffnungs- und damit Verschlusszeitpunkt des Ventils einstellen zu können, d.h. indirekt die auf den Verschlusskörper einwirkende Auftriebskraft, die erforderlich ist, um die eine Längenveränderung bewirkende Federkraft zum Verschließen des Ventils zu kompensieren.

Insbesondere ist vorgesehen, dass der Verschlusskörper zwei unterschiedliche Durchmesser aufweisende Zylinderabsehnitte mit diese verbindendem Kegelstumpfabschnitt umfasst, der mit dem Ventilsitz wechselwirkt.

Dabei sollte der (erste) Zylinderabschnitt geringeren Durchmessers fluidzulaufseitig verlaufen und eingespannt sein. Hierzu kann der erste Zylinderabschnitt von einem Element wie Stiftelement durchsetzt sein, das seinerseits auf einem in dem Gehäuse in Längsrichtung des Verschlusskörpers verstellbaren Lager abgestützt ist. Durch das Verstellen des Lagers wird somit die Vorspannung in dem Verschlusskörper (Länge) eingestellt, wodurch wiederum die erforderliche Auftriebskraft vorgegeben werden kann, die ein Öffnen bzw. Schließen des Ventils ermöglicht.

Nach einer Weiterbildung umfasst das Gehäuse eine den Ventilsitz aufweisende Zwischenwand oder einen den ersten Zylinderabschnitt umgebenden Einsatz, an der bzw. dem das Federelement abgestützt ist.

Um ein einfaches Zusammensetzen des Ventils zu ermöglichen, sieht ein weiterer Vorschlag vor, dass das Widerlager für das den zweiten, den größeren Durchmesser aufweisenden Zylinderabschnitt koaxial umgebende Federelement im freien Endbereich des zweiten Zylinderabschnitts angeordnet bzw. von diesem ausgeht.

Um dem Verschlusskörper eine hinreichende Eigenvorspannung bei gleichzeitiger Möglichkeit zu geben, im erforderlichen Umfang gedehnt zu werden, sollte das Material eine Härte von vorzugsweise in etwa 60 - 80, insbesondere 70 Shore aufweisen. Dabei kann der Verschlusskörper aus Ethylen-Propylen-Elastomer bestehen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform eines Schwimmerventils,
- Fig. 2: eine zweite Ausführungsform eines Schwimmerventils,
- Fig. 3: einen Schnitt entlang der Linie A-A in Fig. 2,
- Fig. 4: einen Längsschnitt durch eine dritte bevorzugte Ausführungsform eines Schwimmerventils,
- Fig. 5: eine Vorderansicht des Schwimmerventils nach Fig. 4,
- Fig. 6: eine Draufsicht auf das Schwimmerventil nach den Fig. 4 und 5 und
- Fig. 7: eine Variante des Schwimmerventils nach den Fig. 4 bis 6.

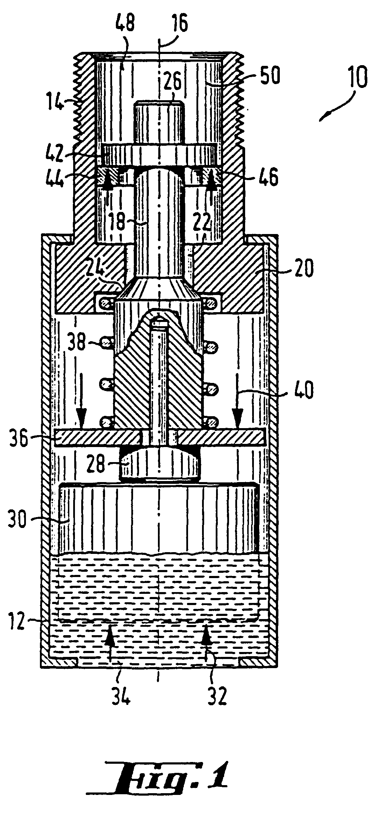

In Fig. 1 ist eine erste Ausführungsform eines Schwimmerventils 10 dargestellt, welches ein Ventilgehäuse 12 mit Einsatz 14 umfasst, entlang dessen Längsachse 16 ein Verschlusskörper 18 in nachstehend beschriebener Art längenveränderbar angeordnet ist.

Der Einsatz 16, der auch integraler Bestandteil des Gehäuses 12 sein kann, weist eine innerhalb des Gehäuses 12 und dieses oberseitig verschließende Bodenwandung 20 auf, die eine zentrale Durchbrechung 22 aufweist. Gehäuseseitig ist die Öffnung 22 als Ventilsitz 24 ausgebildet.

Der Verschlusskörper 18 besteht aus einem sich in dem Einsatz 14 erstreckenden zylindrischen ersten Abschnitt 26 und einem sich innerhalb des Gehäuses 12 erstreckenden zylindrischen zweiten Abschnitt 28 unterschiedlicher Durchmesser, wobei der erste Abschnitt 26 einen kleineren als der gehäuseseitige Abschnitt 28 aufweist. Verbunden sind die Abschnitte 26, 28 über einen Kegelstumpfabschnitt 30, der mit dem Ventilsitz 24 wechselwirkt, um also das Ventil 10 zu verschließen oder über dieses Flüssigkeit strömen zu lassen.

Bodenseitig ist der Verschlusskörper 18 mit einem Schwimmkörper 30 verbunden, auf den dann ein Auftrieb (Pfeile 32) einwirkt, wenn in das Gehäuse 12 über dessen bodenseitige Öffnung 34 Flüssigkeit einströmt.

Von dem zweiten zylindrischen Abschnitt 28 geht ein Widerlager 36 wie Scheibe aus, auf der sich eine koaxial den zylindrischen Abschnitt 28 umgebende Schraubenfeder 38 abstützt. Gegenüberliegend ist die Schraubenfeder 38 in der Zwischenwand 20 abgestützt. Über die Schraubenfeder 38 wirkt aufdas Widerlager 36 eine Kraft (Pfeile 40), wodurch das Bestreben entsteht, dass der Ventilkörper 18 in Richtung der Pfeile 40 verstellt wird, also der zylindrische Abschnitt 30 des Verschlusskörpers 18 von dem Ventilsitz 24 beabstandet wird. Diesem wirkt entgegen, dass der Verschlusskörper 18 mit seinem ersten zylindrischen Abschnitt 26 in dem Einsatz 14 festgespannt ist. Hierzu ist der zylindrische Abschnitt 26 von einem Stift 42 durchsetzt, der seinerseits auf einem Lager 44 abgestützt ist, der von dem Einsatz 14 ausgeht. Dabei ist das Lager 44 in axialer Richtung verstellbar, um auf diese Weise dem Verschlusskörper 18 eine erforderliche Vorspannung zu geben (Pfeile 46). Die Vorspannung ist derart gewählt, dass das Ventil 10 verschlossen ist, wenn auf den Schwimmkörper 30 ein erforderlicher Auftrieb einwirkt.

Strömt nun über die einsatzseitige Öffnung 48 Flüssigkeit in das Ventil 10, so füllt sich der von dem Einsatz 14 umgebene Raum 50, und auf den kegelstumpfförmigen Absatz 30 oberhalb des Ventilsitzes 24 wirkt eine Kraft, zu der die von dem Federelement 38 auf das Widerlager 36 einwirkende Kraft addiert wird. Über den Stift 42 und das Lager 44 wird der Ventilkörper 18 derart vorgespannt, dass dann, wenn auf den Schwimmkörper 30 ein in Abhängigkeit von dem gewünschten Füllstand der Flüssigkeit erforderlicher Auftrieb einwirkt, die von der Flüssigkeit und der Feder 38 auf den Ventilkörper 18 einwirkenden Kräfte nicht ausreichen, um den Ventilkörper 18 von dem Ventilsitz 24 abzuheben, also den Ventilkörper 18 im erforderlichen Umfang zu dehnen. Erst wenn die Flüssigkeit abgesunken ist und damit der Schwimmkörper 30 nicht mehr den notwendigen Auftrieb erfährt, können die von der Feder 38 sowie der Flüssigkeit auf den Verschlusskörper 18 einwirkenden Kräfte eine Dehnung des Verschlusskörpers 18 bewirken, wodurch der Kegelstumpfabschnitt 30 von dem Ventilsitz 24 abgehoben und Flüssigkeit über den entsprechenden Spalt durch das Ventil 10 strömen kann. Sobald die gewünschte Fühlstandshöhe in einem Gefäß, in das das Ventil 10 eintaucht, vorliegt, bewirkt der auf den Schwimmkörper 30 einwirkende Auftrieb, dass die Kräfte der Flüssigkeit und der Feder 38 in einem Umfang kompensiert werden, dass aufgrund der aufden Verschlusskörper 18 einwirkenden Vorspannung dieser zurückgezogen und damit mit dem kegelstumpfförmigen Abschnitt 30 an dem Ventilsitz 24 anliegt, so dass das Ventil 10 wiederum geschlossen ist.

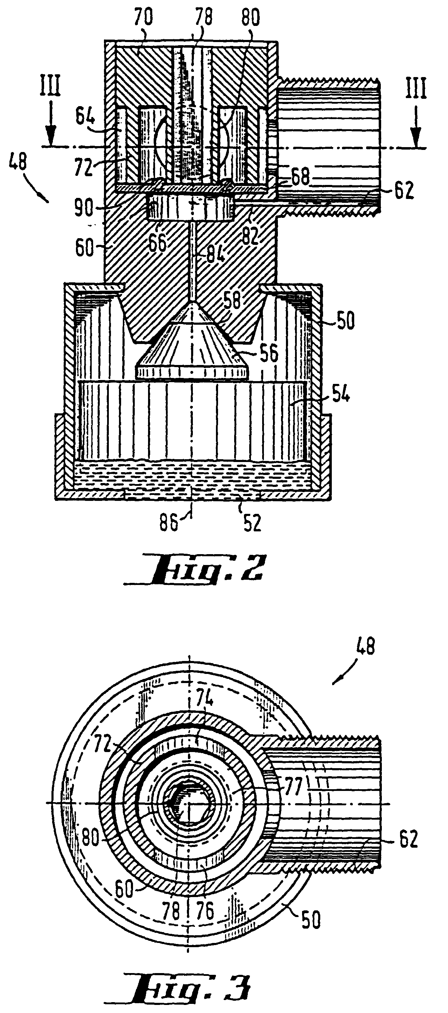

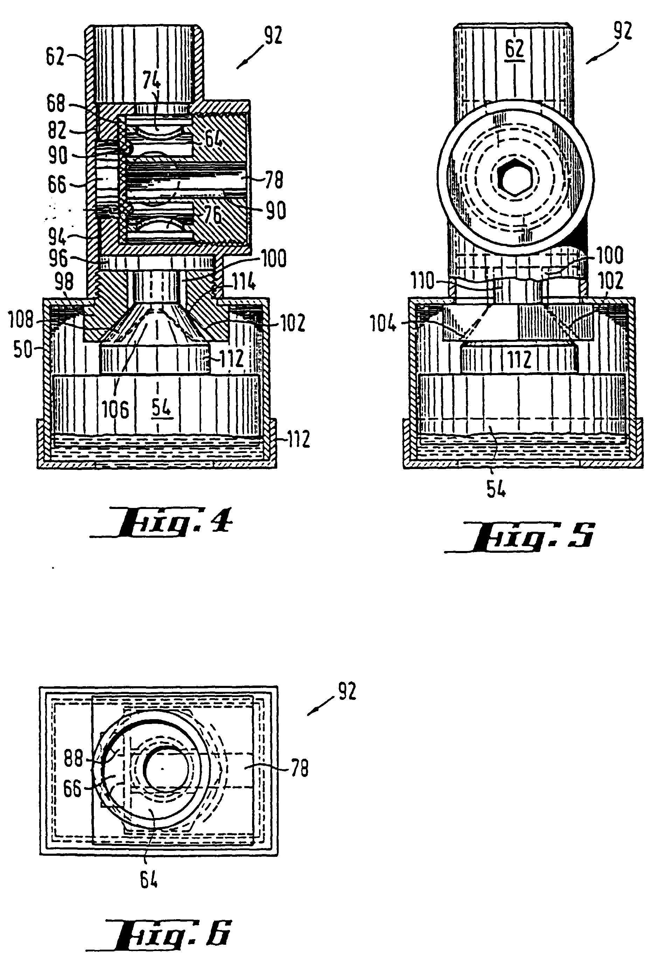

In den Fig. 2 und 3 ist eine weitere hervorzuhebende Ausführungsform eines Schwimmerventils 48 dargestellt, welches ein Gehäuse 50 mit bodenseitiger Flüssigkeit durchlassender Öffnung 52, ein in dieser eintauchenden Auftriebskörper 54 sowie einen mit diesem verbundenen Verschlusskörper 56 umfasst, der in Abhängigkeit von der Stellung des Auftriebskörpers 54 an einem Ventilsitz 58 anliegt oder zu diesem beabstandet ist, der seinerseits in einem ersten Einsatz 60 verläuft, der sich in das Gehäuse 50 erstreckt.

Der Einsatz 60 weist einen Flüssigkeitszulauf 62 auf. Ferner sind in dem Einsatz 60 eine mit Flüssigkeit füllbare erste Kammer 64 und zweite Kammer 66 vorhanden, die über eine Membran 68 flüssigkeitsdicht voneinander getrennt sind. Die Membran 68 wird über einen weiteren sich in die zweite Kammer 66 hineinerstreckenden Einsatz 70 fixiert. Der weitere Einsatz 70 weist einen zur Innenwandung der Kammer 64 verlaufenden hohlzylindrischen Abschnitt 72 auf, über den die Membran 68 auf einer Bodenwandung des ersten Einsatzes 60 festgelegt wird. Der Hohlzylinderabschnitt 72 weist Durchbrechungen 74, 76 auf, über die über die Zulauföffnung 62 Flüssigkeit in den von dem zylindrischen Abschnitt 72 umgebenen Raum 77 strömen kann. Der zylindrische Abschnitt 72 umgibt des Weiteren seinerseits einen inneren zylindrischen zu einer Auslassöffnung 78 führenden Abschnitt 80, der in nachstehend beschriebener Art entweder von der Membran 68 abgedichtet oder von dieser bodenseitig freigegeben werden kann, damit über den als Auslasselement zu bezeichnenden Abschnitt 80 Flüssigkeit über die Auslassöffnung 78 strömen kann.

Die Zulauföffnung 62 ist nicht nur mit der ersten Kammer 64, sondern auch über eine Bypassleitung 82 mit der zweiten Kammer 66 verbunden, von der eine Verbindung 84 zu dem Gehäuse 50 führt, und zwar in dem Bereich, der von dem Verschlusskörper 56 entweder verschlossen oder freigegeben wird.

Im Ausführungsbeispiel mündet die Leitung 84 im Bodenbereich des Einsatzes 60 oberhalb des Verschlusskörpers 56 und damit des Ventilsitzes 58. Die Verbindung 84 verläuft entlang der Mittelachse 86 sowohl des Gehäuses 50 als auch des Einsatzes 60 und der von dem Auslasselement 80 umgebenen Öffnung 78, also auch in Achsrichtung des kegel- bzw. kegelstumpfförmig ausgebildeten Verschlusskörpers.

Wie die zeichnerischen Darstellungen verdeutlichen, ist die zweite Kammer 66 kleiner als die erste Kammer 64. Vorzugsweise beträgt das Verhältnis 1:10 bis 1:20.

Die Membran 68, die von dem zweiten Einsatz 70 eingespannt wird, weist einen sich in Richtung der ersten Kammer 60 und in diese hineinerstreckenden ringförmigen Wulst 90 auf, der einerseits als Zentrierhilfe dient und andererseits eine Materialverstärkung bildet. Die Membran 68 kann des Weiteren gegenüberliegend des Wulstes 90 durch einen umlaufenden Einschnitt wie Nut geschwächt sein.

Die Funktion des erfindungsgemäßen Ventils 48 ist wie folgt. Über die Zulauföffnung 62 strömt sowohl in die erste Kammer 64 als auch über die Leitung 82 in die zweite Kammer 66 Flüssigkeit, die über die Verbindung 84 in den Bereich des Ventilsitzes 58 gelangt. Sofern sich in dem Gehäuse 50 über die Öffnung 52 eingeströmte Flüssigkeit befindet, wird der Schwimmkörper auftriebsbedingt in einem Umfang angehoben, dass der Verschlusskörper 56 an dem Ventilsitz 58 dichtend anliegt, so dass über die Leitung 84 Flüssigkeit nicht in das Gehäuse 50 strömen kann. Hierdurch bedingt verläuft die Membran 62 zwischen der ersten Kammer 64 und der zweiten Kammer 66 derart, dass das Auslasselement 80 bodenseitig von der Membran 68 dichtend verschlossen ist, so dass infolgedessen Flüssigkeit über die Auslassöffnung 78 nicht strömen kann. Erst wenn der Auftriebskörper 54 aufgrund nicht hinreichenden Auftriebs abfällt, so dass der Verschlusskörper 56 zu dem Ventilsitz 58 beabstandet ist und Flüssigkeit aus der zweiten Kammer 66 über die Verbindung 84 in das Gehäuse 50 strömen kann, bewirkt der Flüssigkeitsdruck der ersten Kammer 64 auf die Membran 68, dass sich die Membran 68 in Richtung der zweiten Kammer 66 mit der Folge verstellt, dass das Auslasselement 80 bodenseitig geöffnet und somit Flüssigkeit von dem Flüssigkeitszulauf 62 über die Öffnungen 74, 76 in den inneren Ringraum 74 und damit über das Auslasselement 80 nach außen strömen kann.

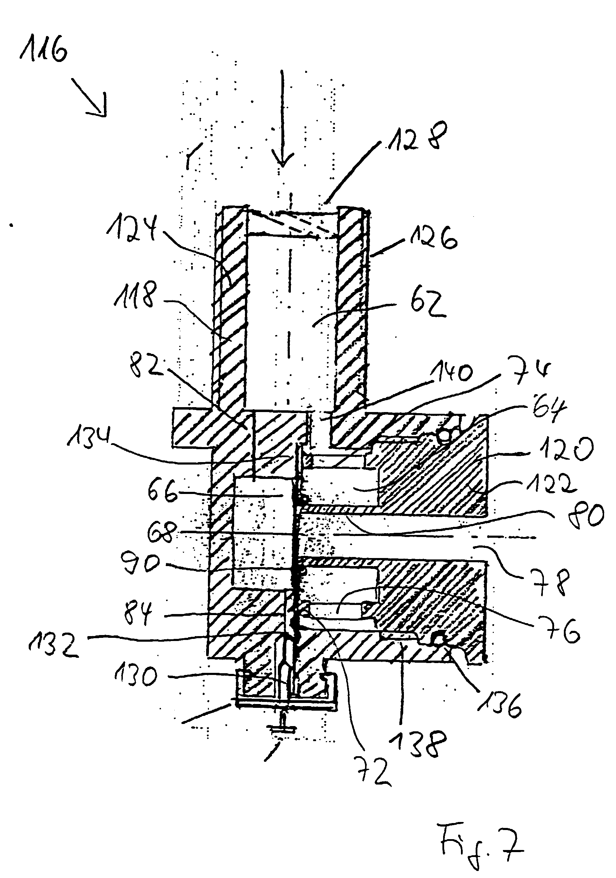

Ein in den Fig. 4 bis 6 dargestelltes Schwimmerventil 92 entspricht vom Aufbau dem der Fig. 2 und 3, so dass grundsätzlich für gleiche Elemente gleiche Bezugszeichen verwendet werden. Abweichend von den Fig. 2 und 3 ist das Auslasselement 90 mit dem Flüssigkeitsauslauf 78 horizontal angeordnet. Der Flüssigkeitszulauf 62 verläuft vertikal. Ungeachtet dessen trennt die Membran 68 die erste Kammer 64 von der zweiten Kammer 66, die über die Leitung 82 bzw. den Bypass mit dem Flüssigkeitszulauf 62 verbunden ist. Die zweite Kammer 66 geht über eine Verbindung wie Bohrung 94 in einen Raum 96 über, der von einem Einsatz 98 in dem Gehäuse 50 begrenzt wird. Der Einsatz 98 weist seinerseits eine aus einem zylindrischen Abschnitt 100 und einem Kegelstumpfabschnitt 102 zusammengesetzte Öffnung 104 auf, innerhalb der sich ein Verschlusskörper 106 axial in Abhängigkeit von dem aufden Schwimmkörper 54 einwirkenden Auftrieb verstellt. Der Verschlusskörper 106 setzt sich aus einem Kegelstumpfabschnitt 108, einem von der Kegelstumpfspitze ausgehenden zylindrischen Abschnitt 110, der innerhalb des zylindrischen Abschnitts 100 der Öffnung 108 verläuft, sowie einem bodenseitigen zylindrischen Abschnitt 112 zusammen, der mit dem Auftriebskörper 54 verbunden ist. Der Übergang zwischen dem zylindrischen Abschnitt 100 und dem kegelstumpfförmigen Abschnitt 102 der Öffnung 108 bildet einen Ventilsitz 114, über den die Öffnung 108 dann freigegeben wird, wenn der Verschlusskörper 106 aufgrund des nicht ausreichenden Auftriebs auf den Schwimmkörper 54 - in der zeichnerischen Darstellung nach unten - verstellt ist. In diesem Fall kann über die Leitung oder Bohrung 94 aus der zweiten Kammer 66 in den Raum 96 und damit in das Gehäuse 50 Flüssigkeit mit der Folge strömen, dass die Membran 68 in Richtung der zweiten Kammer 66 verstellt wird, so dass Flüssigkeit von dem Einlauf 62 über das Auslasselement 80 zu der Auslassöffnung 78 strömen kann.

Der Fig. 7 ist eine Variante der Ausführungsform des erfindungsgemäßen Schwimmerventils der Fig. 4 bis 6 zu entnehmen. Dabei werden für gleiche Elemente grundsätzlich gleiche Bezugszeichen benutzt.

So umfasst das Ventil 116 ein Gehäuse 118 mit einem Einsatz 120, der die Auslassöffnung 78 umfasst. Der Einsatz 120 kann dabei aus einem zylindrischen Basisabschnitt 122 bestehen, von dem der hohlzylindrische die Auslassöffnung 78 begrenzende Hohlzylinderabschnitt 80 sowie der die Durchbrechungen 74, 76 aufweisende und konzentrisch zu dem Abschnitt 80 verlaufende Hohlzylinderabschnitt 72 abragen. Der die Flüssigkeitszulauföffnung 62 begrenzende Abschnitt 124 des Gehäuses 118 kann ein Außengewinde 126 aufweisen, um das Ventil 116 in eine Öffnung einzuschrauben. Ferner kann die Einlassöffnung 62 eine Zentrifugenscheibe 128 aufweisen.

Der Einlass 62 ist über die als Bohrung 82 ausgebildete Leitung mit der zweiten Kammer 66 verbunden, die ihrerseits über die ebenfalls als Bohrung 84 ausgebildete Verbindung zu dem Bereich des Ventils 116 führt, der in Abhängigkeit des auf den nicht dargestellten Auftriebskörper einwirkenden Auftriebs von dem als Verschlussstift 130 ausgebildeten Verschlusskörper verschließbar oder freigebbar ist. Letzteres erfolgt dann, wenn der Auftriebskörper nicht im erforderlichen Umfang angehoben ist, dass der Verschlussstift 130 die Bohrung 84 nicht verschließen kann, dessen Öffnung 132 die Funktion als Ventilsitz ausübt, an dem erwähntermaßen in Abhängigkeit des Auftriebs der Verschlussstift 130 entweder dichtend anliegt oder beabstandet zu diesem verläuft.

Ferner ist der zeichnerischen Darstellung zu entnehmen, dass die Membran 68 einen konzentrisch den Hohlzylinderabschnitt 80 umgebenden Wulst 90 aufweist, um eine gewünschte Zentrierung vorzunehmen. Die Membran 68 selbst ist über den hohlzylindrischen die Durchbrechungen 74, 76 aufweisenden Abschnitt 72 an einer kreisringförmigen Wandung 134 des Gehäuses 180 dichtend fixiert.

Der die Auslassöffnung 78 aufweisende Einsatz 120 selbst ist gegenüber dem Gehäuse 118 über eine umlaufende Dichtung wie O-Ring 136 abgedichtet. Die Verbindung zwischen dem Gehäuse 118 und dem Einsatz 120 erfolgt durch Schrauben. Ein entsprechendes Gewinde ist mit dem Bezugszeichen 138 versehen.

Die Funktion des Ventils 116 entspricht der der Fig. 2 bis 6. Dies bedeutet, dass dann, wenn über den Zulauf 62 Flüssigkeit ansteht, diese einerseits durch die Bohrung 82 in die zweite Kammer 66 und andererseits über eine weitere Bohrung 140 in den Ringraum 77 strömt, der innenseitig von dem den Auslass 78 umgebenden Hohlzylinderabschnitt 80 begrenzt ist. Sofern der Verschlussstift 130 die Bohrung 84 verschließt, also dichtend an dem Ventilsitz 132 anliegt, verschließt die Membran 68 die Öffnung des hohlzylindrischen Abschnitts 80. Fällt der Verschlussstift 130 wegen fehlenden Auftriebs auf den Auftriebskörper ab, so kann aus der zweiten Kammer 86 Flüssigkeit über die Bohrung 84 ausströmen. Infolgedessen bewirkt der in der ersten Kammer 64 anstehende Flüssigkeitsdruck, dass die Membran 68 in Richtung der zweiten Kammer 64 mit der Folge verstellt wird, dass über den Auslass 78 Flüssigkeit strömen kann.

## Patentansprüche

1. Absperrorgan (48, 92, 116) für Fluide umfassend ein Gehäuse (50, 118) mit in diesem verstellbarem an einem Ventilsitz (58, 114, 122) anliegenden bzw. eine Öffnung verschließenden oder zu diesem beabstandeten bzw. die Öffnung freigebenden Verschlusskörper (56, 106, 130) sowie verstellbarem Auftriebskörper (54), über den bei unzureichendem Auftrieb mittelbar oder unmittelbar der Verschlusskörper von dem Ventilsitz bzw. der Öffnung beabstandet ist, um eine Verbindung zwischen Fluidzulauf (62) und Fluidauslauf (78) herzustellen,
**dadurch gekennzeichnet**,
dass der Fluidzulauf (62) in einer bodenseitig von einer Membran (68) begrenzten ersten Kammer (64) mündet, dass die Membran gegenüberliegend zu der ersten Kammer eine zweite Kammer (66) begrenzt, dass von der zweiten Kammer eine erste Verbindung (84) ausgeht, die zu einem den Ventilsitz (58, 114, 132) aufweisenden Gehäuseabschnitt oder einen Einsatz (60, 98) oder eine Öffnung des Gehäuses (50, 118) verläuft und die durch den Verschlusskörper (56, 106, 130) absperrbar oder freigebbar ist, dass zwischen dem Fluidzulauf und der zweiten Kammer eine zweite Verbindung (82) verläuft, dass in der ersten Kammer oberhalb des membranseitig freien Querschnitts der zweiten Kammer ein den Fluidauslass (78) bildendes Auslasselement (80) angeordnet ist, das bei an dem Ventilsitz anliegendem oder die Öffnung verschließenden Verschlusskörper dichtend von der Membran verschlossen ist, und dass bei zu dem Ventilsitz oder der Öffnung beabstandetem Verschlusskörper die Membran in Richtung der zweiten Kammer zum Freigeben des Auslasselements verstellbar ist.

2. Absperrorgan nach Anspruch 1,
**dadurch gekennzeichnet**,
dass der membranseitige Querschnitt der ersten Kammer (64) größer als der der zweiten Kammer (66) ist und dass insbesondere die erste Kammer in Bezug auf die aufzunehmende Flüssigkeit bei abgedichtetem Auslasselement (80) ein Volumen aufweist, das zwei- bis zehnmal, insbesondere fünf- bis zehnmal größer als das der zweiten Kammer ist.

3. Absperrorgan nach Anspruch 1 oder 2,
**dadurch gekennzeichnet**,
dass das Auslasselement (80) ein hohlzylindrisches Element eines Gehäuseeinsatzes (70, 120) ist, das seinerseits koaxial und beabstandet von einer zumindest einen Durchbruch (74, 76) aufweisenden Wandung (72) umgeben ist, über die das Fluid in den zwischen dem Auslasselement (80) und der Wandung vorhandenen Raum (77) strömt, wobei über die Wandung die Membran vorzugsweise an einer kreisringförmigen Wandung (134) des Gehäuses fixiert ist.

4. Absperrorgan nach einem der vorhergehenden Ansprüche,
**dadurch gekennzeichnet**,
dass die Membran (68) einen umlaufenden in Richtung der ersten Kammer (66) sich erstreckenden Wulst (88) aufweist, über die die Membran zu dem Auslasselement (80) bzw. dem hohlzylindrischen Element zentrierbar ist.

5. Absperrorgan nach einem der vorhergehenden Ansprüche,
**dadurch gekennzeichnet**,
dass die Fluidzulaufrichtung und die Fluidauslassrichtung des Auslasselementes (80) zueinander einen rechten oder in etwa einen rechten Winkel beschreiben.

6. Absperrorgan nach einem der vorhergehenden Ansprüche,
**dadurch gekennzeichnet**,
dass der Verschlusskörper (56) einen an den Ventilsitz (58) anlegbaren bzw. die Öffnung der ersten Verbindung (84) verschließenden Kegelstumpfabschnitt (108) oder Verschlussstift (130) aufweist.

7. Absperrorgan nach einem der vorhergehenden Ansprüche,
**dadurch gekennzeichnet**,
dass die zu der zweiten Kammer (66) führende erste Verbindung (84) in Längsachsenrichtung des Verschlusselements (56) wie -stifts verläuft.

8. Absperrorgan nach einem der vorhergehenden Ansprüche,
**dadurch gekennzeichnet**,
dass der Verschlusskörper (56, 106, 130) bodenseitig oder über einen bodenseitig verlaufenden Abschnitt (106) mit dem Auftriebskörper (54) verbunden ist.

9. Absperrorgan für Fluide umfassend ein Gehäuse mit in diesem verstellbarem an einem Ventilsitz anliegenden oder zu diesem beabstandeten Verschlusskörper sowie verstellbarem Auftriebskörper, über den bei unzureichendem Auftrieb mittelbar oder unmittelbar der Verschlusskörper von dem Ventilsitz beabstandet ist, um eine Verbindung zwischen Fluidzulauf und Fluidauslauf herzustellen,
**dadurch gekennzeichnet**,
dass der Verschlusskörper (18) in dessen Verstellrichtung längenveränderbar ist, dass der Verschlusskörper in dem Gehäuse (12, 14) eingespannt ist und beabstandet hierzu ein Widerlager für ein den Verschlusskörper in dessen Verstellrichtung kraftbeaufschlagendes Federelement (38) aufweist, dass der Verschlusskörper mit dem Auftriebskörper (30) verbunden ist und dass bei unzureichendem Auftrieb das Federelement den Verschlusskörper derart kraftbeaufschlagt, dass der Verschlusskörper von dem Ventilsitz (30) beabstandet ist.

10. Absperrorgan nach Anspruch 8,
**dadurch gekennzeichnet**,
dass der Verschlusskörper (18) zwei unterschiedliche Durchmesser aufweisende Zylinderabschnitte (26, 28) mit diese verbindendem Kegelstumpfabschnitt (30) umfasst, der dem Ventilsitz (24) zugeordnet ist.

11. Absperrorgan nach Anspruch 8 oder 9,
**dadurch gekennzeichnet**,
dass der (erste) Zylinderabschnitt (26) geringeren Durchmessers fluidzulaufseitig verläuft und eingespannt ist.

12. Absperrorgan nach zumindest einem der vorhergehenden Ansprüche,
**dadurch gekennzeichnet,**
dass der erste Zylinderabschnitt (26) mit einem Element verbunden wie von einem Stiftelement (42) durchsetzt ist, das seinerseits auf einem in dem Gehäuse (14) in Längsrichtung des Verschlusskörpers (18) verstellbaren Lager (42) abgestützt ist.

13. Absperrorgan nach zumindest einem der vorhergehenden Ansprüche,
**dadurch gekennzeichnet**,
dass das Gehäuse (12, 14) eine den Ventilsitz (24) aufweisende Zwischenwand oder einen den ersten Zylinderabschnitt (26) umgebenden Einsatz (14) aufweist, an der bzw. dem das Federelement (38) abgestützt ist.

14. Absperrorgan nach zumindest einem der vorhergehenden Ansprüche,
**dadurch gekennzeichnet**,
dass das Widerlager (36) für das Federelement (38) im freien Endbereich des zweiten den größeren Durchmesser aufweisenden Zylinderabschnitt (28) des Verschlusskörpers (18) angeordnet ist bzw. von diesem ausgeht.

15. Absperrorgan nach zumindest einem der vorhergehenden Ansprüche,
**dadurch gekennzeichnet**,
dass der Verschlusskörper (18) eine Härte von vorzugsweise in etwa 60 - 80, insbesondere 70 Shore aufweist.

16. Absperrorgan nach zumindest einem der vorhergehenden Ansprüche,
**dadurch gekennzeichnet**,
dass der Verschlusskörper aus Ethylen-Propylen-Elastomer besteht.
